Europäisches Patentamt

European Patent Office

Office européen des brevets

(19)

(11) Veröffentlichungsnummer: **0 287 574**
**B1**

(12) **EUROPÄISCHE PATENTSCHRIFT**

(45) Veröffentlichungstag der Patentschrift: 03.10.90

(21) Anmeldenummer: 87904679.5

(22) Anmeldetag: 21.07.87

(86) Internationale Anmeldenummer:
PCT/DE87/00325

(87) Internationale Veröffentlichungsnummer:
WO 88/02809 21.04.88 Gazette 88/09

(51) Int. Cl.⁵: **F 02 B 37/02,** F 01 N 7/08,
F 01 N 7/10

(54) ABGASLEITUNG FÜR EINE AUFGELADENE, MEHRZYLINDRIGE KOLBENBRENNKRAFTMASCHINE.

(30) Priorität: 18.10.86 DE 3635478

(43) Veröffentlichungstag der Anmeldung:
26.10.88 Patentblatt 88/43

(45) Bekanntmachung des Hinweises auf die
Patenterteilung:
03.10.90 Patentblatt 90/40

(84) Benannte Vertragsstaaten:
AT CH DE FR GB IT LI

(56) Entgegenhaltungen:
DE-A-2 617 456
DE-A-3 018 742
DE-C-3 445 916
FR-A-1 333 507
FR-A-2 074 857
FR-A-2 164 138
FR-A-2 372 316
US-A-2 081 546

(73) Patentinhaber: MTU MOTOREN- UND
TURBINEN-UNION FRIEDRICHSHAFEN GMBH
Olgastrasse 75 Postfach 20 40
D-7990 Friedrichshafen 1 (DE)

(72) Erfinder: DEUTSCHMANN, Herbert
Wachtelweg 9
D-7990 Friedrichshafen 5 (DE)

Courier Press, Leamington Spa, England.

## Beschreibung

Die Erfindung bezieht sich auf eine Abgasleitung für eine aufgeladene Kolbenbrennkraftmaschine gemäß dem Oberbegriff von Patentanspruch 1. Derartig gekapselte Abgasleitungen bewirken einen minimalen Wärmeverlust aus dem Abgas und kommen bei Anwendungen zum Einsatz, die niedrige Oberflächentemperaturen verlangen.

Eine gattungsgemäße Abgasleitung ist aus der DE-C- 34 45 916 bekannt. Die innere, das Abgas führende Leitung unterliegt im Betrieb hohen Wechselbelastungen infolge hoher Abgastemperatur, der pulsierenden Abgasströmung und den von der Kolbenbrennkraftmaschine ausgehenden Schwingungen. Ein besonderes Problem ist die betriebssichere Befestigung der nahezu Abgastemperatur aufweisenden inneren Leitung am umgebenden, unter Umständen gekühlten Gehäuse. Die Wärmedehnungsunterschiede auf Grund unterschiedlicher und wechselnder Temperaturen zwischen den Befestigungsvorrichtungen der inneren Leitung und dem Gehäuse bewirken Relativbewegungen, die zu örtlichem Reibverschleiß führen. Außerdem sind Schweißverbindungen an tragenden Elementen der inneren Leitung bei den auftretenden Wechselbelastungen besonders rißempfindlich.

Es ist deshalb Aufgabe der Erfindung, für eine gattungsgemäße Abgasleitung eine innere Leitung zu schaffen, bei der keine Schweißverbindungen erforderlich sind.

Diese Aufgabe wird erfindungsgemäß mit den kennzeichnenden Merkmalen von Anspruch 1 gelöst und mit den Merkmalen der Ansprüche 2 bis 14 weiter ausgestaltet. Die Formgebung der rinnenförmigen Teile macht Schweißverbindungen an der inneren Leitung überflüssig und vermindert die Rißempfindlichkeit. Die bei der Montage in den rinnenförmigen Teilen durch das Spreizen erzeugte Vorspannung, die in kaltem Zustand für die Bauteile eine völlig unkritische Beanspruchung darstellt, ist bei Erreichen der Betriebstemperatur infolge der Wärmedehnung kompensiert. Damit sind die sonst durch Wärmedehnung erzeugten, bei hoher Temperatur kritischen Bauteilbeanspruchungen bei der erfindungsgemäßen Abgasleitung nicht vorhanden. Durch die Anordnung der Schrauben zur Befestigung der inneren Leitung werden Relativbewegungen zwischen Gehäuse und innerer Leitung bei Temperaturwechsel vermieden und die im Betrieb auftretenden Gaskräfte in das Gehäuse abgeleitet, ohne daß sich Verformungen an der inneren Leitung ergeben.

Die mit der Erfindung erzielten Vorteile bestehen insbesondere darin, daß die rinnenförmigen Teile der Abschnitte für die innere Leitung besonders wirtschaftlich aus Blech herstellbar sind, daß sich durch die Vorspannung eine verminderte Materialbeanspruchung bei Betriebstemperatur der inneren Leitung ergibt, daß dadurch für die Herstellung der rinnenförmigen Teile preiswertes Material mit weniger hochentwickelter Warmfestigkeit einsetzbar ist und daß mit der vorgeschlagenen Ausbildung der inneren Leitung eine betriebssichere und zugleich gewichtssparende Bauweise der Abgasleitung gefunden ist.

Ein Ausführungsbeispiel der Erfindung ist in den Zeichnungen dargestellt und wird nachstehend näher beschrieben. Es zeigen:

Fig. 1 Draufsicht der montierten inneren Leitung einer Abgasleitung;

Fig. 2 Querschnitt einer Abgasleitung nach Linie II-II in Fig. 1;

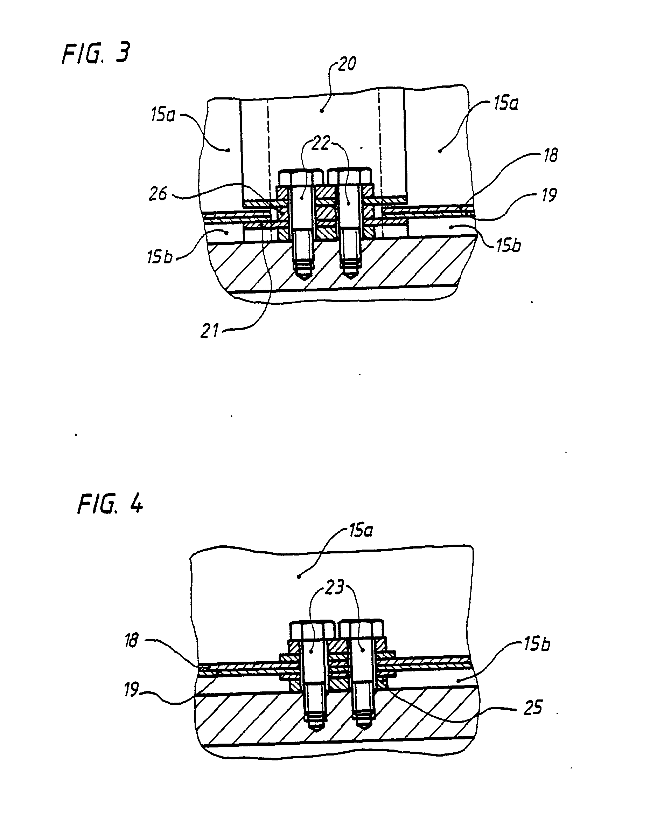

Fig. 3 Schnitt durch eine Befestigungsvorrichtung für die Abdeckstreifen nach Linie III-III in Fig. 2;

Fig. 4 Schnitt durch eine Befestigungsvorrichtung für die rinnenförmigen Teile nach Linie IV-IV in Fig. 2;

Fig. 5 Ansicht eines Endes der inneren Leitung mit einteiligem Deckel;

Fig. 6 Ansicht eines Endes der inneren Leitung mit zweiteiligem Deckel;

Fig. 7 Schnitt durch die Befestigungsvorrichtung eines Deckels der inneren Leitung nach Linie VII-VII in Fig. 5;

Fig. 8 Schnitt eines Endes der inneren Leitung nach Linie VIII-VIII in Fig. 6;

Fig. 9 Ansicht eines Endes der inneren Leitung mit vierteiligem Deckel;

Fig. 10 Schnitt im Endbereich der inneren Leitung nach Linie X-X in Fig. 9;

Fig. 11 Schnitt durch eine Befestigungsvorrichtung eines Endabschnittes der inneren Leitung nach Linie XI-XI in Fig. 1.

Bei einer aufgeladenen, mehrzylindrigen Kolbenbrennkraftmaschine befindet sich eine Abgasleitung im Raum des Zylinder-Kurbelgehäuse 17 zwischen den V-förmig angeordneten Zylinderreihen. Die Abgase aus den Zylindern beider Reihen werden von einer inneren Leitung 11 aufgenommen, die mit Abstand von einem gasdichten, flüssigkeitsgekühlten Gehäuse 12, 13 umgeben ist.

An den Auslaßöffnungen der Zylinder sind Abgasstutzen 29 angeordnet, die durch entsprechende Öffnungen in die innere Leitung 11 hineinragen, mit ihr aber nicht verbunden sind. Für den Anschluß der Abgaseintritte zu Abgasturboladern sind an der inneren Leitung 11 mehrere Öffnungen 27 angeordnet.

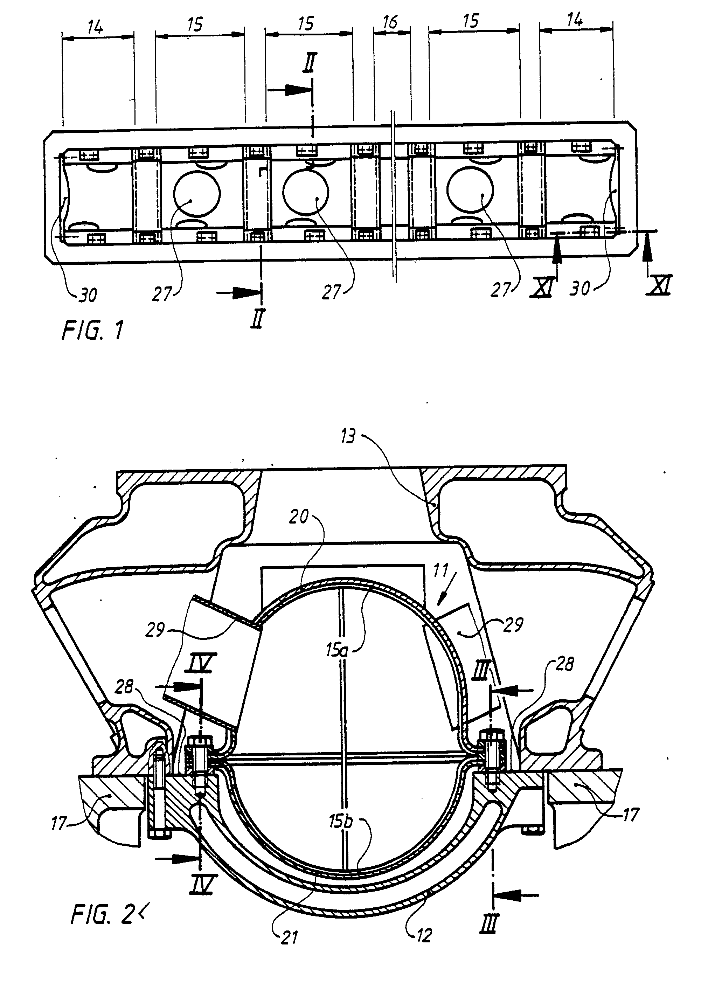

Die innere Leitung 11 ist aus einzelnen Abschnitten 14, 15, 16, deren Länge jeweils etwa dem Zylinderabstand der Kolbenbrennkraftmaschine entspricht, zusammengesetzt. Jeder Abschnitt 14, 15, 16 besteht aus zwei rinnenförmigen Teilen, z.B. 15a, 15b in Fig. 2, die mit an beiden Längsrändern angeformten Flanschen 18, 19 aufeinanderliegend zwischen sich den Leitungsquerschnitt bilden. Mit den Flanschen sind die rinnenförmigen Teile jedes Abschnittes 14, 15, 16 auf Konsolen 28 des umgebenden Gehäuses 12, 13 befestigt. Die Abschnitte 14, 15, 16 der inneren Leitung 11 sind in Längsrichtung unter Bildung von Dehnfugen aneinandergereiht, ohne sich gegenseitig zu berühren. An jeder zwischen zwei Abschnitten 14, 15, 16 der inneren Leitung 11 befindlichen Dehnfuge sind der Außenkontur der rinnenförmigen Teile angepaßte Abdeckstreifen 20, 21 angeordnet, die die Enden der benachbarten Abschnitte der inneren Leitung 11 überlappen. Dadurch wird die Leckgasströmung in den Raum zwischen innerer Leitung und Gehäuse sehr gering und damit auch der Wärmeverlust aus dem Abgas.

Die Abschnitte 14, 15, 16 der inneren Leitung 11 sind durch Schrauben 23 in Längs- und Querrichtung befestigt. Die Schrauben 23 der Abschnitte 14, 15, 16 sind jeweils in einer Ebene mittig zwischen den Gasaustrittsströmungen von zwei etwa gegenüberliegenden Abgasstutzen 29 angeordnet. Der auf die Wand der rinnenförmigen Teile von der Abgasströmung ausgeübte Strahldruck wird so unmittelbar von den Schrauben 23 aufgenommen. Verformungen der inneren Leitung durch Gaskräfte sind damit vermieden. Durch Unterlegplatten 25, die zusätzlich wärmedämmend ausgebildet sein können, ergibt sich eine kleine Kontaktfläche zwischen der inneren Leitung 11 und dem Gehäuse 12 an den Befestigungsstellen. Dadurch wird der Wärmefluß aus der inneren Leitung, die ja nahezu Abgastemperatur erreicht, ins Gehäuse klein gehalten. Die Abdeckstreifen 20, 21 sind durch Schrauben 22 ebenfalls in Längs- und Querrichtung befestigt, wobei zur Wärmedämmung ebenfalls die Unterlegplatte 25 verwendet wird. Die Innenumfangslänge eines Abdeckstreifens 20, 21 von Flansch zu Flansch gemessen, ist etwa in der Größenordnung der Wanddicke eines rinnenförmigen Teiles größer ausgebildet, als die Außenumfangslänge des zugeordneten rinnenförmigen Teiles. Zusammen mit der Anordnung einer Distanzplatte 26 zwischen den Flanschen der Abdeckstreifen 20, 21 ist dafür gesorgt, daß im Flansch- und Umfangsbereich zwischen den Abschnitten 14, 15, 16 und den Abdeckstreifen 20, 21 in der Überlappungszone ein Spalt verbleibt. Dadurch wird die im Betrieb in der Überlappungszone eventuell auftretende Relativbewegung zwischen den Enden der Abschnitte und den Abdeckstreifen 20, 21 infolge der Wärmedehnung in Längsrichtung nicht behindert.

Die lichte Weite eines Abdeckstreifens 20, 21 in Flanschebene ist etwa in der Größenordnung der Wanddicke eines rinnenförmigen Teiles kleiner als das korrespondierende Breitenmaß der zugeordneten rinnenförmigen Teile. Daraus resultiert bei der Montage der inneren Leitung ein Kontakt zwischen den Abdeckstreifen 20, 21 und den jeweils zugeordneten rinnenförmigen Teilen in der Überlappungszone in einem mittleren Bereich des Rinnenbogens. Durch das definierte Untermaß des Abdeckstreifens ist die an den Kontaktstellen auf die rinnenförmigen Teile ausgeübte Kraft sehr gering, so daß sich daraus keine Behinderung von Wärmedehnungen in Längsrichtung ergibt. Die Kraft ist aber groß genug, um Schwingungen der rinnenförmigen Teile zu dämpfen.

Bei der Montage wird der inneren Leitung 11 durch Spreizung der rinnenförmigen Teile eines jeden Abschnittes 14, 15, 16 eine quer zur Längsrichtung wirkende Vorspannung gegeben. Die Spreizung erfolgt um ein Maß, das der bei Betriebstemperatur zu erwartenden Wärmedehnung entspricht. Die in den rinnenförmigen Teilen durch das Spreizen erzeugte Vorspannung, die in kaltem Zustand für die Bauteile eine völlig unkritische Beanspruchung darstellt, ist bei Erreichen der Betriebstemperatur infolge der Wärmedehnung kompensiert. Damit sind die sonst durch behinderte Wärmedehnung erzeugten, bei hoher Temperatur kritischen Bauteilbeanspruchungen nicht vorhanden.

An beiden Enden der inneren Leitung 11 sind die Stirnöffnungen durch lösbar mit Schrauben an den rinnenförmigen Teilen befestigte Deckel 30, 31, 32 verschlossen. Jeder Deckel 30, 31, 32 weist eine quer zur Flanschebene verlaufende Wölbung auf, die von der Kontur der zugeordneten Stirnöffnung abweicht, so daß nur der obere und untere Randbereich des Deckels 30, 31, 32 vor dem Befestigen Kontakt mit den entsprechenden rinnenförmigen Teilen 14a, 14b hat. Bei der Montage paßt sich der Deckel 30, 31, 32 durch Verformung der Wölbung an die Kontur der Stirnöffnung an. Im Deckel 30, 31, 32 ergibt sich damit eine Vorspannung, die Schwingungen der oberen und unteren Deckelbereiche verhindert.

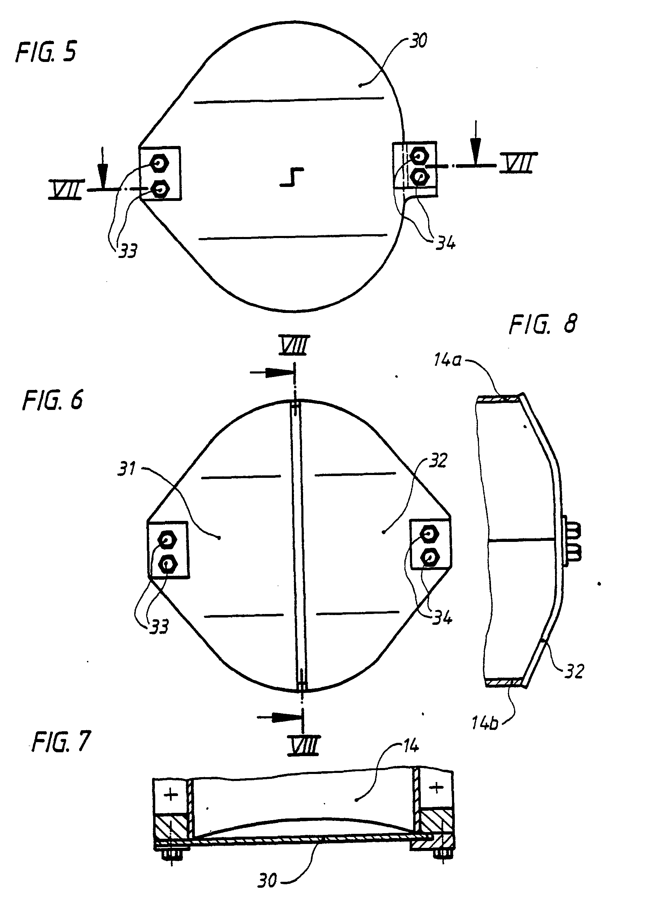

In Fig. 5 ist eine Ausführung des Endverschlusses der inneren Leitung 11 mit einteiligem Deckel 30 dargestellt, der auf einer Seite im Bereich der Flanschebene starr und auf der gegenüberliegenden Seite durch ein Klemmstück verschiebbar am Endabschnitt 14 der inneren Leitung 11 befestigt ist. Bei Erwärmung kann sich der Deckel zur Seite des Klemmstücks unbehindert dehnen.

Fig. 6 zeigt eine Variante des Endverschlusses der inneren Leitung 11 mit Deckeln, die durch eine senkrecht zur Flanschebene verlaufende Dehnfuge geteilt sind. Jede Deckelhälfte 31, 32 ist dabei für sich im Bereich der Flanschebene mittels Schrauben 33 bzw 34 starr am Endabschnitt 14 der inneren Leitung 11 befestigt. Die Wärmedehnung der Deckelhälften 31, 32 wird in der Dehnfuge aufgefangen. Bei Betriebstemperatur ist die Dehnfuge nahezu geschlossen, so daß auch an diesen Stellen nur wenig Leckgas in den Raum zwischen innerer Leitung und Gehäuse austreten kann.

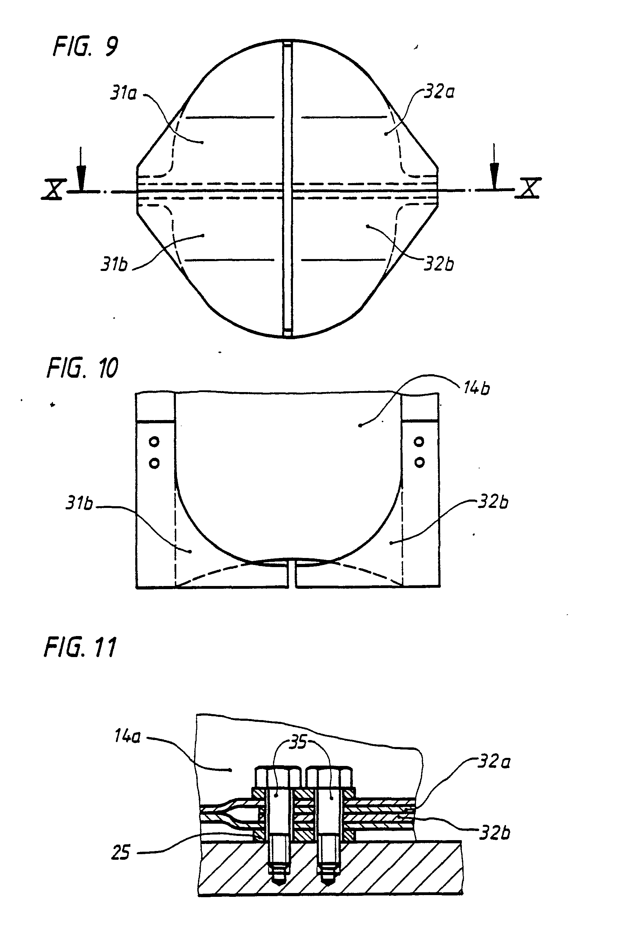

Eine andere Variante des Endverschlusses ergibt sich aus Fig. 9. Jede Deckelhälfte 31, 32 ist dabei in Flanschebene nochmals geteilt. An jeder der vier Teildeckel 31a, 31b, 32a, 32b ist in dieser Teilungsebene ein zum Leitungsinnern weisender Flansch angeformt, der sich in Flanschebene der rinnenförmigen Teile 14a, 14b in Längsrichtung der inneren Leitung 11 bis zu Schrauben 35 erstreckt. Die Flansche der Teildeckel 31a, 31b, 32a, 32b sind zwischen den Flanschen der rinnenförmigen Teile 14a, 14b angeordnet. Die vier auf jeder Seite der inneren Leitung 11 dabei aufeinanderliegenden Flansche werden zusammen durch die Schrauben 35 am Gehäuse 12 befestigt.

## Patentansprüche

1. Abgasleitung für eine aufgeladene, mehrzylindrige Kolbenbrennkraftmaschine mit wenigstens einer die Abgase führenden inneren Leitung (11) und einem diese Leitung (11) mit Abstand umgebenden gasdichten Gehäuse (12, 13), wobei die innere Leitung (11) aus einzelnen Abschnitten (14, 15, 16) besteht, die in Längsrichtung unter Bildung von Dehnfugen aneinandergereiht sind, und die Länge eines Abschnitts (14, 15, 16) etwa dem Zylinderabstand der Kolbenbrennkraftmaschine entspricht, dadurch gekennzeichnet, daß jeder Abschnitt (14, 15, 16) der inneren Leitung (11) aus zwei rinnenförmigen Teilen besteht, die mit an beiden Längsrändern angeformten Flanschen (18, 19) aufeinanderliegend zwischen sich den Leitungsquerschnitt bilden, und daß die Flansche (18, 19) der rinnenförmigen Teile am umgebenden Gehäuse (12, 13) befestigt sind.

2. Abgasleitung nach Anspruch 1, dadurch gekennzeichnet, daß an jeder zwischen zwei Abschnitten (14, 15, 16) der inneren Leitung (11) befindlichen Dehnfuge den rinnenförmigen Teilen angepaßte Abdeckstreifen (20, 21) angeordnet sind, die die Enden der benachbarten Abschnitte der inneren Leitung (11) überlappen.

3. Abgasleitung nach Anspruch 2, dadurch gekennzeichnet, daß die lichte Weite eines Abdeckstreifens (20, 21) in Flanschebene etwa in der Größenordnung der Wanddicke eines rinnenförmigen Teiles kleiner als das korrespondierende Breitenmaß der zugeordneten rinnenförmigen Teile ausgebildet ist.

4. Abgasleitung nach Anspruch 3, dadurch gekennzeichnet, daß die Innenumfangslänge eines Abdeckstreifens (20, 21) etwa in der Größenordnung der Wanddicke eines rinnenförmigen Teiles größer als die Außenumfangslänge der zugeordneten rinnenförmigen Teile ausgebildet ist.

5. Abgasleitung nach Anspruch 1 und 2, dadurch gekennzeichnet, daß der Abstand, der in den Flanschen der rinnenförmigen Teile (14, 15, 16) sich in Querrichtung gegenüberliegenden Bohrungen für die Schrauben (23), im unmontierten Zustand der inneren Leitung (11) kleiner ist als der entsprechende Abstand der zugeordneten Gewindelöcher im Gehäuse (12).

6. Abgasleitung nach Anspruch 1 und 2, dadurch gekennzeichnet, daß die Abschnitte (14, 15, 16) der inneren Leitung (11) und die Abdeckstreifen (20, 21) an den Flanschen (18, 19) durch Schrauben (22, 23, 35) in Längs- und Querrichtung fixiert sind.

7. Abgasleitung nach Anspruch 6, dadurch gekennzeichnet, daß zwischen den Flanschen (18, 19) und dem Gehäuse (12) bei jeder Schraube (22, 23, 35) eine wärmedämmend ausgebildete Unterlegplatte (25) angeordnet ist.

8. Abgasleitung nach Anspruch 6, dadurch gekennzeichnet, daß die Schrauben (23) für die Abschnitte (14, 15, 16) jeweils etwa in der Ebene der Gasaustrittsströmung der zugehörigen Zylinder angeordnet sind.

9. Abgasleitung nach Anspruch 1, dadurch gekennzeichnet, daß die Stirnöffnungen an den Enden der inneren Leitung (11) durch lösbar an den rinnenförmigen Teilen befestigte Deckel (30, 31, 32) verschlossen sind.

10. Abgasleitung nach Anspruch 9, dadurch gekennzeichnet, daß jeder Deckel (30, 31, 32) eine quer zur Flanschebene verlaufende Wölbung aufweist, die von der Kontur der zugeordneten Stirnöffnung abweicht, so daß nur der obere und untere Randbereich des Deckels vor dem Befestigen Kontakt mit dem entsprechenden rinnenförmigen Teil (14a, 14b) hat.

11. Abgasleitung nach Anspruch 9 und 10, dadurch gekennzeichnet, daß jeder Deckel (30) auf einer Seite im Bereich der Flanschebene starr und auf der gegenüberliegenden Seite verschiebbar befestigt ist.

12. Abgasleitung nach Anspruch 9 und 10, dadurch gekennzeichnet, daß jeder Deckel senkrecht zur Flanschebene unter Bildung einer Dehnfuge geteilt ist und jede Deckelhälfte (31, 32) für sich im Bereich der Flanschebene starr befestigt ist.

13. Abgasleitung nach Anspruch 12, dadurch gekennzeichnet, daß jede Deckelhälfte (31, 32) in Flanschebene geteilt ist und an jedem der vier Teildeckel (31a, 31b, 32a, 32b) ein zum Leitungsinnern weisender Flansch angeformt ist.

14. Abgasleitung nach Anspruch 13, dadurch gekennzeichnet, daß die Flansche der Teildeckel (31a, 31b, 32a, 32b) zwischen den Flanschen der rinnenförmigen Teile (14a, 14b) angeordnet und alle vier Flansche auf jeder Seite der inneren Leitung (11) zusammen durch Schrauben (35) am Gehäuse (12) befestigt sind.

## Revendications

1. Conduit d'échappement destiné à un moteur suralimenté à combustion interne et à pistons, ce conduit comportant au moins un conduit intérieur (11) servant au passage du gaz d'échappement, et un corps (12, 13) étanche aux gaz qui entoure à une certaine distance le conduit intérieur (11), le conduit intérieur (11) étant constitué par des parties individuelles (14, 15, 16) qui sont disposées en ligne les unes à côté des autres dans le sens longitudinal en formant des joints de dilatation, et la longueur d'une partie (14, 15, 16) correspondant approximativement à la distance existant entre les cylindres du moteur à combustion interne à pistons, conduit caractérisé en ce que chaque partie (14, 15, 16) du conduit intérieur (11) est constituée par deux pièces en forme de rigoles qui forment entre elles la section transversale du conduit, en étant disposées l'une sur l'autre à l'aide de rebords (18, 19) formés sur les deux bords longitudinaux, et en ce que les rebords (18, 19) des pièces en forme de rigoles sont fixés au corps (12, 13) formant l'entourage.

2. Conduit d'échappement selon la revendication 2, caractérisé en ce qu'à l'endroit de chaque joint de dilatation qui se trouve entre deux parties (14, 15, 16) du conduit intérieur (11), sont disposées des bandes (20, 21) de recouvrement adaptées aux pièces en forme de rigoles qui chevauchent les extrémités des parties voisines du conduit intérieur (11).

3. Conduit d'échappement selon la revendication 2, caractérisé en ce que la largeur libre d'une bande (20, 21) de recouvrement est plus petite d'approximativement l'ordre de grandeur de l'épaisseur de paroi d'une pièce en forme de rigole, que la dimension en largeur correspondante des parties en forme de rigole qui lui sont associées.

4. Conduit d'échappement selon la revendication 3, caractérisé en ce que la longueur du contour intérieur d'une bande (20, 21) de recouvrement est plus grande d'approximativement l'ordre de grandeur de l'épaisseur de paroi d'une pièce en forme de rigole, que la longueur du contour extérieur des pièces en forme de rigole qui lui sont associées.

5. Conduit d'échappement selon les revendications 1 ou 2, caractérisé en ce que la distance qui existe entre les alésages destinés aux vis (23) situés en face les uns des autres dans le sens transversal dans les rebords des pièces (14, 15, 16) en forme de rigoles, est plus faible, à l'état non monté du conduit intérieur (11), que la distance correspondante entre des trous filetés associés du corps (12).

6. Conduit d'échappement selon la revendication 1 et 2, caractérisé en ce que les parties (14, 15, 16) du conduit intérieur (11) et les bandes (20, 21) de recouvrement sont fixées aux rebords (18, 19) au moyen des vis (22, 23, 35) dans le sens longitudinal et dans le sens transversal.

7. Conduit d'échappement selon la revendication 6, caractérisé en ce qu'entre les rebords (18, 19) et le corps (12) est disposée pour chaque vis (22, 23, 35) une plaque (25) d'appui calorifuge.

8. Conduit d'échappement selon la revendication 6, caractérisé en ce que les vis (23) destinées aux parties (14, 15, 16) sont disposées dans chaque cas approximativement dans le plan de l'écoulement de sortie des gaz du cylindre correspondant.

9. Conduit d'échappement selon la revendication 1, caractérisé en ce que les orifices frontaux sont fermés, aux extrémités du conduit intérieur (11), par des couvercles (30, 31, 32) fixés de façon démontable aux pièces en forme de rigoles.

10. Conduit d'échappement selon la revendication 9, caractérisé en ce que chaque couvercle (30, 31, 32) présente un bombement qui s'étend transversalement au plan des rebords, qui s'écarte du contour de l'orifice frontal correspondant de façon telle qu'il n'y a que la zone de bord supérieure et la zone de bord inférieure du couvercle qui soient, avant la fixation, en contact avec la pièce (14a, 14b) en forme de rigole correspondante.

11. Conduit d'échappement selon les revendications 9 et 10, caractérisé en ce que chaque couvercle (30) est fixé de façon rigide d'un côté dans la zone du plan des rebords et de façon mobile du côté opposé.

12. Conduit d'échappement selon les revendications 9 et 10, caractérisé en ce que chaque couvercle est divisé, perpendiculairement au plan des rebords, avec formation d'un joint de dilatation, et que chaque moitié (31, 32) de couvercle est fixée individuellement de façon rigide dans la zone du plan des rebords.

13. Conduit d'échappement selon la revendication 12, caractérisé en ce que chaque moitié (31, 32) de couvercle est divisée dans le plan des rebords et en ce que, sur chacun des quatre couvercles partiels (31a, 31b, 32a, 32b) est formé un rebord orienté vers l'intérieur du conduit.

14. Conduit d'échappement selon la revendication 13, caractérisé en ce que les rebords des couvercles partiels (31a, 31b, 32a, 32b) sont disposés entre les rebords des pièces (14a, 14b) en forme de rigoles, et en ce que les quatre rebords sont tous fixés ensemble, de chaque côté du conduit intérieur (11), au moyen de vis (35) sur le corps (12).

## Claims

1. An exhaust manifold for a supercharged multicylinder reciprocating internal-combustion engine with at least one internal duct (11) conveying the exhaust gases and a gas-tight housing (12, 13) which surrounds and is spaced apart from this duct (12), wherein the internal duct (11) comprises individual sections (14, 15, 16) which are arranged side by side in longitudinal direction so as to form expansion joints, and the length of one section (14, 15, 16) corresponds approximately to the distance between cylinders of the reciprocating internal-combustion engine, characterised in that each section (14, 15, 16) of the internal duct (11) comprises two channel-shaped parts which have flanges (18, 19) formed on both longitudinal edges and both of which define the duct cross-section when superimposed, and in that the flanges (18, 19) of the channel-shaped parts are secured to the surrounding housing (12, 13).

2. An exhaust manifold according to Claim 2 [sic], characterised in that covering strips (20, 21) are provided at each expansion joint situated between two sections (14, 15, 16) of the internal duct (11), which covering strips conform to the channel-shaped parts and which overlap the ends of the adjacent sections of the internal duct (11).

3. An exhaust manifold according to Claim 2, characterised in that the inside width of a covering strip (20, 21), which in the flange plane is approximately of the order of magnitude of the wall thickness of a channel-shaped part, is designed to be less than the corresponding width dimension of the associated channel-shaped parts.

4. An exhaust manifold according to Claim 3, characterised in that the inner circumferential length of a covering strip (20, 21), which is approximately of the order of magnitude of the wall thickness of a channel-shaped part, is designed to be greater than the outer circumferential length of the associated channel-shaped parts.

5. An exhaust manifold according to Claims 1 and 2, characterised in that the distance apart of the bores for the screws (23) in the flanges of the channel-shaped parts (14, 15, 16) and situated opposite one another in transverse direction, is smaller in the non-installed condition of the internal duct (11) than the corresponding distance apart of the associated threaded holes in the housing (12).

6. An exhaust manifold according to Claims 1 and 2, characterised in that the sections (14, 15, 16) of the internal duct (11) and the covering strips (20, 21) are secured in longitudinal and tranverse direction at the flanges (18, 19) by screws (22, 23, 35).

7. An exhaust manifold according to Claim 6, characterised in that at each screw (22, 23, 35) a shim (25) of heat-insulating design is disposed between the flanges (18, 19) and the housing (12).

8. An exhaust manifold according to Claim 6, characterised in that the screws (23) for the sections (14, 15, 16) are each disposed approximately in the plane of the gas-outlet flow of the associated cylinder.

9. An exhaust manifold according to Claim 1, characterised in that the end openings at the ends of the internal duct (11) are closed by covers (30, 31, 32) detachably fastened to the channel-shaped parts.

10. An exhaust manifold according to Claim 9, characterised in that each cover (30, 31, 32) has a curvature which extends transversely to the flange plane and which differs from the contour of the associated end opening, so that only the upper and lower edge zone of the cover is in contact with the corresponding channel-shaped part (14a, 14b) prior to being secured.

11. An exhaust manifold according to Claims 9 and 10, characterised in that each cover (30) is secured rigidly on one side in the vicinity of the flange plane and displaceably on the opposite side.

12. An exhaust manifold according to Claims 9 and 10, characterised in that each cover is divided perpendicularly to the flange plane to form an expansion joint and each cover half (31, 32) is rigidly secured per se in the vicinity of the flange plane.

13. An exhaust manifold according to Claim 12, characterised in that each cover half (31, 32) is divided in the flange plane and a flange facing towards the interior of the duct is formed on each of the four cover parts (31a, 31b, 32a, 32b).

14. An exhaust manifold according to Claim 13, characterised in that the flanges of the cover parts (31a, 31b, 32a, 32b) are disposed between the flanges of the channel-shaped parts (14a, 14b) and on each side of the internal duct (11) all four flanges are together secured to the housing (12) by screws (35).

FIG. 1

FIG. 2

FIG. 3

FIG. 4

FIG. 5

30

VII
VII

33

34

FIG. 6

VIII

31

32

33

34

VIII

FIG. 7

14

+     +

30

FIG. 8

14a

32

14b

FIG. 9

FIG. 10

FIG. 11